# EUROPEAN PATENT APPLICATION

(11) **EP 1 645 723 A1**
(43) Date of publication of application: **12.04.2006**
(21) Application number: 04745758.5
(22) Date of filing: 10.06.2004
(51) Int. Cl.: F01D 5/28, F02C 7/00, B22D 19/10, B21K 3/04, C23C 26/00, B23H 9/10, B23H 9/00

(54) **TURBINE COMPONENT, GAS TURBINE ENGINE, METHOD FOR MANUFACTURING TURBINE COMPONENT, SURFACE PROCESSING METHOD, VANE COMPONENT, METAL COMPONENT, AND STEAM TURBINE ENGINE**

(30) Priority: 10.06.2003 JP 2003165403; 11.06.2003 JP 2003167068; 24.03.2004 JP 2004088031; 24.03.2004 JP 2004088033
(71) Applicant: Ishikawajima-Harima Heavy Industries Co., Ltd., Chiyoda-ku, Tokyo 100-8182 (JP); MITSUBISHI DENKI KABUSHIKI KAISHA, Tokyo 100-8310 (JP)
(72) Inventor: OCHIAI, Hiroyuki Ishikajima-Harima Heavy Ind.Co.,, Chiyoda-ku 100-8182 (JP); WATANABE, Mitsutoshi c/oIshikawajima-Harima Heavy, Chiyoda-ku Tokyo 100-8182 (JP); GOTO, Akihiro c/o Mitsubishi Denki K.K., Tokyo (JP); AKIYOSHI, Masao c/o Mitsubishi Denki K.K., Tokyo 100-8310 (JP)
(74) Representative: Godwin, Edgar James
(86) International application number: PCT/JP2004/008128
(87) International publication number: WO 2004/111394

(57) **Abstract**

What disclosed is formation of a protective coating having oxidation resistance and abrasiveness at a portion to be processed of a component main body by employing an electrode composed of a molded body molded form a mixed powder in which a powder of an oxidation-resistant metal and a powder of a ceramic is mixed or the molded body processed with a heat treatment, generating a pulsing electric discharge between the electrode and the portion to be processed of the component main body so that an electrode material of the electrode and such carry out deposition, diffusion and/or welding on the portion to be processed of the component main body by energy of the electric discharge.

## Description

### TECHNICAL FIELD

The present invention relates to a turbine component, a gas turbine engine, a production method of a turbine component, a blade component, a metal component and a steam turbine engine.

### BACKGROUND ART

A turbine rotor blade applied to a gas turbine engine for a jet engine or such is one of components of the turbine and provided with a rotor blade main body as a main body of a component. As well, portions to be processed of the turbine rotor blade main body in the turbine rotor blade, are processed with a surface treatment so as to locally ensure abrasiveness and oxidation resistance, where the abrasiveness means a quality of capability of easily abrading an opposite component.

More specifically, portions except the portions to be processed in the turbine rotor blade main body are masked. And, by using oxidation-resistant metal as a material for spraying, a base coating having oxidation resistance is formed on the portions to be processed of the turbine rotor blade main body by spraying. Further, by using a ceramic as a material for spraying, a hard protective coating is formed on the base coating by spraying.

### DISCLOSURE OF INVENTION

By the way, because coatings such as the base coating and the protective coating are formed by spraying, pretreatments such as a blast treatment, a sticking treatment of a masking tape and such accompanying formation of the coatings and post-treatments such as a removal treatment of the mas king tape and such accompanying formation of the coatings are respectively necessary. Therefore, process steps required to production of the turbine rotor blade are increased so that the production time of the turbine rotor blade is elongated and hence there is a problem that improvement of productivity of the turbine rotor blade is not easy.

Moreover, for the same reason, there are problems that the coatings are susceptible to peeling off from the rotor blade main body and quality of the turbine rotor blade is unstable.

Meanwhile, the aforementioned problems are not limited to the turbine rotor blade and similarly occur in cases of any turbine components and further any metal components including the turbine components.

Then, to solve the above problems, a first feature of the present invention is a turbine component applied to a gas turbine engine and rotatable around an axial center of the gas turbine engine, which is provided with a component main body; and a protective coating having oxidation resistance and abrasiveness formed on a treatment,subject body of the component main body, wherein the protective coating is formed by employing an electrode composed of a molded body molded from a mixed powder of a powder of an oxidation-resistant metal and a powder of a ceramic or the molded body processed with a heat treatment, and generating a pulsing electric discharge between the portion to be processed of the component main body and the electrode in an electrically insulating liquid or gas so that an electrode material of the electrode or a reaction substance of the electrode material carries out deposition, diffusion and/or welding on the portion to be processed of the component main body by energy of the electric discharge.

Moreover, a second feature of the present invention is a turbine component applied to a gas turbine engine, which is provided with a component main body; a first protective coating having abrasiveness and erosion resistance formed on a first treatment subject body of the component main body; and a second protective coating having oxidation resistance formed on a second treatment subject body including the first treatment subject body so as to cover the first protective coating, wherein the first protective coating is formed by employing an electrode composed of a molded body molded from a powder of one material or a powder of two or more mixed materials of a powder of a metal, a metal compound and a powder of a ceramic or the molded body processed with a heat treatment, and generating a pulsing electric discharge between the first portion to be processed of the component main body and the electrode in an electrically insulating liquid or gas so that an electrode material of the electrode or a reaction substance of the electrode material carries out deposition, diffusion and/or welding on the first portion to be processed of the component main body by energy of the electric discharge.

Moreover, a third feature of the present invention is a turbine component applied to a gas turbine engine, which is provided with a component main body; a porous base coating having oxidation resistance and heat-shielding property formed on a portion to be processed of the component main body by energy of an electric discharge; an intermediate coating composed of a compositematerial consisting primarily of at least any one of SiC and MoSi₂ which is changeable into SiO₂ having fluidity when the gas turbine engine is in operation; a hard protective coating composed of an oxide series ceramic, cBN, a mixture of the oxide series ceramic and the oxidation-resistant metal or a mixture of cBN and the oxidation-resistant metal and having abrasiveness, erosion resistance or oxidation resistance formed on a surface side of the intermediate coating by energy of an electric discharge.

Furthermore, a fourth feature of the present invention is being provided with a component main body; and a hard protective having erosion resistance formed on a portion to be processed of the component main body, wherein the protection degree coating is formed by employing an electrode composed of a molded body molded from a powder of a metal or a mixed powder of a powder of a metal and a powder of a ceramic or the molded body processed with a heat treatment, and generating a pulsing electric discharge between the portion to be processed of the component main body and the electrode in an electrically insulating liquid or gas so that an electrode material of the electrode or a reaction substance of the electrode material carries out deposition, diffusion and/or welding on a predetermined portion in the component main body by energy of the electric discharge.

### BRIEF DESCRIPTION OF DRAWINGS

[Fig. 1] A schematic drawing of a gas turbine engine in accordance with embodiments.

[Fig. 2] A side view of a turbine rotor blade in accordance with a first embodiment.

[Fig. 3] A side view of an electric spark machine in accordance with the embodiments.

[Fig. 4] Fig. 4 (a) and Fig. 4(b) are drawings for explaining a production method of a turbine component in accordance with the first embodiment.

[Fig. 5] A side view of a turbine rotor blade in accordance with a modified example of the first embodiment.

[Fig. 6] A side view of a turbine rotor blade in accordance with a second embodiment.

[Fig. 7] Fig. 7 (a) and Fig. 7(b) are drawings for explaining a surface treatment method in accordance with the second embodiment.

[Fig. 8] Fig. 8(a) is a drawing along a line VIIIA-VIIIA in Fig. 8 (b) and Fig. 8 (b) is a side view of a turbine rotor blade in accordance with a third embodiment.

[Fig. 9] Fig. 9(a) and Fig. 9(b) are drawings for explaining a surface treatment method in accordance with the third embodiment.

[Fig. 10] A side view of a turbine rotor blade in accordance with a fourth embodiment.

[Fig. 11] Fig. 11 (a) and Fig. 11 (b) are drawings for explaining a surface treatment method in accordance with the fourth embodiment.

[Fig. 12] Fig. 12 (a) and Fig. 12 (b) are drawings for explaining a surface treatment method in accordance with a modified example of the fourth embodiment.

[Fig. 13] A schematic drawing of a steam engine in accordance with a fifth embodiment.

[Fig. 14] A side view of a turbine rotor blade in accordance with a fifth embodiment.

[Fig. 15] Fig. 15 (a) is an overhead view of Fig. 15 (b) and Fig. 15(b) is a drawing for explaining a surface treatment method in accordance with the fifth embodiment.

[Fig. 16] Fig. 16 (a) is an overhead view of Fig. 16 (b) and Fig. 16(b) is a drawing for explaining a surface treatment method in accordance with the fifth embodiment.

[Fig. 17] Fig. 17 is a side view of a turbine rotor blade in accordance with a modified example of the fifth embodiment.

### BEST MODE FOR CARRYING OUT THE INVENTION

A description will be hereinafter given to certain embodiments of the present invention for describing the present invention in further detail with appropriate reference to the accompanying drawings. Meanwhile, in the drawings, "FF" denotes a forward direction and "FR" denotes a rearward direction. Moreover, in the description, in proper, "a cross direction" is referred to as an X-axis direction, "a horizontal direction" is referred to as a Y-axis direction and "a vertical direction" is referred to as a Z-axis direction.

### (FIRST EMBODIMENT)

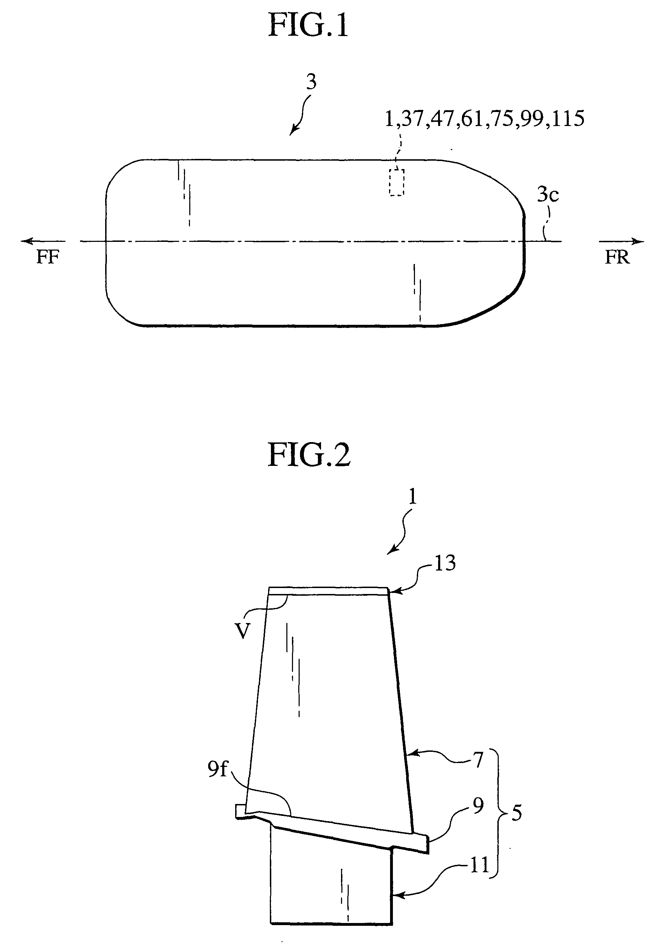

A first embodiment will be described hereinafter with reference to Fig. 1, Fig. 2, Fig. 3, Fig. 4(a) and Fig. 4(b).

As shown in Fig: 1 and Fig. 2, a turbine rotor blade 1 in accordance with the first embodiment is one of turbine components employed in a gas turbine engine 3 of a jet engine and such and is rotatable around an axial center 3c of the gas turbine engine 3.

The turbine rotor blade 1 is provided with a rotor blade main body 5 as a component main body and the rotor blade main body 5 is composed of a rotor blade 7, a platform 9 formed in a unitary body with a proximal side of the rotor blade 7 and a dovetail 11 formed at the platform 9. Here, the platform 9 has a flow pathway face 9f for a combustion gas and the dovetail 11 is engagable with a dovetail gutter (not shown) of a turbine disk (not shown). Meanwhile, a tip end portion of the rotor blade 7 serves as a portion to be processed.

And, as described later, a protective coating 13 of a novel constitution having abrasiveness and oxidation resistance is formed at the tip end portion of the blade 7 and a surface side of the protective coating 13 is processed with a peening treatment. In other words, based on a novel surface treatment method in accordance with the first embodiment, a surface treatment so as to ensure oxidation resistance and abrasiveness is processed with respect to the tip end portion of the blade 7.

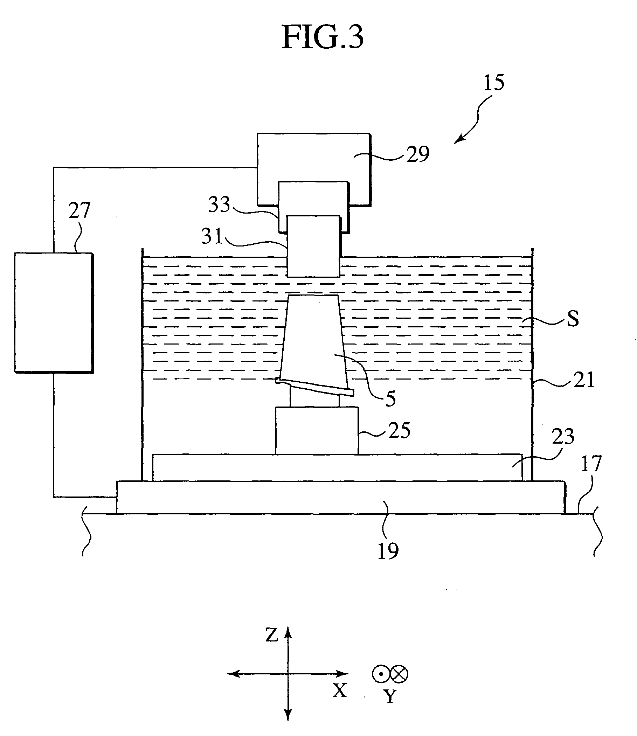

As shown in Fig. 3, an electric spark machine 15 in accordance with the embodiment is an apparatus for being employed for the surface treatment with respect to the portion to be processed of the component main body in the turbine components such as the tip end portion of the rotor blade 7 and provided with a bed 17 extending in an X-axis direction and a Y-axis direction. Further, the bed 17 is provided with a table 19 and the table 19 is movable in the X-axis direction by means of a drive of an X-axis servo motor (not shown) and movable in the Y-axis direction by means of a drive of a Y-axis servo motor (not shown).

The table 19 is provided with a processing tank 21 for reserving a liquid S of electrical insulation such as a processing oil and, in the processing tank 21, a support plate 23 is provided. The support plate 23 is provided with a jig 25 to which the component main body such as the rotor blade main body 5 is capable of setting and the jig 25 is electrically connected to an electric power source 27.

Above the bed 17, a processing head 29 is provided with interposing a column (not shown) and the processing head 29 is movable in a Z-axis direction by means of a drive of a Z-axis servo motor (not shown). Moreover, the processing head 29 is provided with a support member 37 for supporting an electrode 31. Meanwhile, the support member 37 is electrically connected to the electric power source 27.

Here, the electrode 31 is composed of a molded body molded by compressing mixed powder of powder of an oxidation-resistant metal and powder of a ceramic or the molded body processed with a heat treatment by means of a vacuum furnace or such. Meanwhile, instead of molding by compressing, the electrode 31 may be formed by slurry pouring, MIM (Metal Injection Molding), spray forming and such.

Moreover, the oxidation-resistant metal composing the electrode 31 denotes any one or more metals of M-CrAlY and NiCr alloys. Furthermore, M in M-CrAlY denotes Co, Ni or both Co and Ni, more specifically, M-CrAlY denotes CoCrAlY, NiCrAlY, CoNiCrAlY or NiCoCrAlY. Meanwhile, because Si may have a possibility to form an eutectic with Ni at temperatures over 1000 degrees C, M-CrAlY is preferably CoCrAlY or CoNiCrAlY.

The ceramic composing the electrode 31 is any one material or any two or more materials of cBN, TiC, TiN, TiAlN, TiB₂, WC, SiC, Si₃N₄, Cr₃C₂, Al₂O₃, ZrO₂-Y, ZrC, VC and B₄C.

Table 1 shows Vickers hardness of cBN, various carbides and oxides at the room temperature.

**[Table 1] Vickers hardness (room temperature)**

| cBN | TiC | WC | SiC | Cr₃C₂ | Al₂O₃ | ZrO₂ |
|---|---|---|---|---|---|---|
| 4500 | 3200 | 2200 | 2400 | 2280 | 1900 | 1300 |

Meanwhile, a tip end of the electrode 31 shows a shape similar to the tip end portion of the blade 7.

A production method of the turbine component in accordance with the first embodiment is a method for producing the turbine rotor blade 1 and provided with the following a (i) main body formation step, a (ii) coating formation step, and a (iii) peening step. Here, the (ii) coating formation step and the (iii) peening step are based on the novel surface treatment method in accordance with the first embodiment.

### (i) MAIN BODY FORMATION STEP

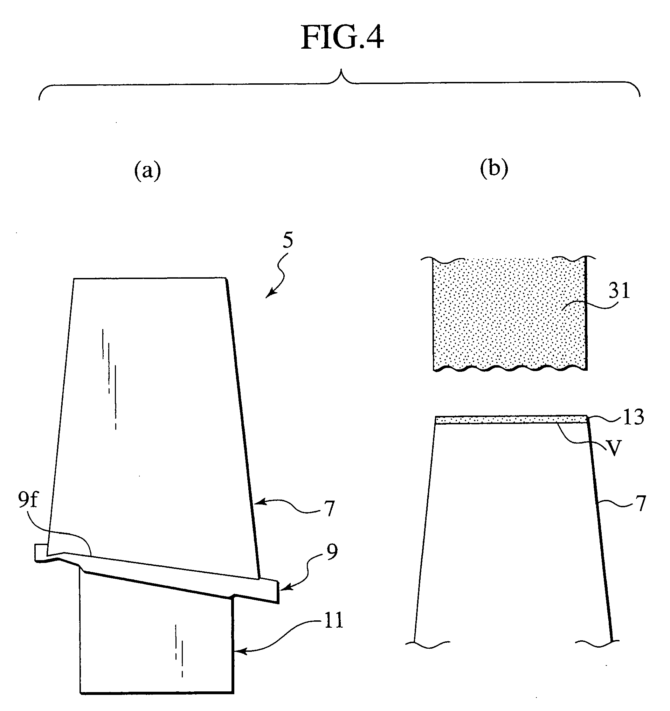

As shown in Fig. 4 (a), a major part of the rotor blade main body 5 is formed by means of forging or casting. Further, a remaining part, for example an external form part of a dovetail 11, of the rotor blade 5 is formed by means of machining such as grinding.

### (ii) COATING FORMATION STEP

After finishing the (i) main body formation step, the rotor blade main body 5 is set at the jig 25 so as to direct the tip end portion of the airfoil 7 upward. Next, by means of driving the X-axis servo motor and the Y-axis servo motor, the table 19 is moved in the X-axis direction and the Y-axis direction to position the rotor blade main body 5 so that the tip end portion of the blade 7 is opposed to the electrode 31. Meanwhile, there may be a case where the table 19 is only necessary to be moved in any of the X-axis direction and the Y-axis direction.

Further, a pulsing electric discharge is generated between the electrode 31 and the tip end portion of the blade 7. Thereby, as shown in Fig. 4 (b) , by means of energy of the electric discharge, the electrode material of the electrode 31 or a reaction substance of the electrode material carries out deposition, diffusion and/or welding on the tip end portion of the blade 7 so that the protective coating 13 having oxidation resistance and abrasiveness can be formed. Meanwhile, when generating the pulsing discharge, the electrode, as being integral with the processing head 29, is reciprocated in the Z-axis direction by a small travel distance.

Here, "deposition, diffusion and/or welding" means all meanings including "desposition", "diffusion", "welding", "mixed phenomena of deposition and diffusion", "mixed phenomena of deposition and welding", "mixed phenomena of diffusion and welding" and "mixed phenomena of deposition, diffusion and welding".

### (iii) PEENING STEP

After finishing the (ii) coating formation step, the rotor blade main body 5 is detached from the jig 25 and set in a predetermined position of a peening machine (not shown) . Further, the surface side of the protective coating 13 is processed with the peening treatment. As concrete modes of the peening treatment, a shot-peening treatment using shot (see Japanese Patent Application Laid-open No. 2001-170866, 2001-260027 and 2000-225567, for example) and a laser-peening treatment using laser (see Japanese Patent Application Laid-open No. 2002-236112 and 2002-239759, for example) are exemplified.

Then the production of the turbine rotor blade 1 is finished.

Next, operations of the first embodiment will be described.

First, because the protective coating 13 is formed by means of the energy of the electric discharge, a range of the protective coating 13 can be limited within a range where the electric discharge is generated and hence a pretreatment accompanying the formation of the protective coating and a post-treatment accompanying the formation of the protective coating can be respectively omitted.

Moreover, for the same reason, a boundary part B between the protective coating 13 formed by the energy of the electric discharge and the base material of the rotor blade main body 5 has a structure in which a composition ratio grades and hence the protective coating 13 and the base material of the rotor blade main body 5 can be firmly combined.

Furthermore, because the surface side of the protective coating 13 is processed with the peening treatment, residual compression stress canbe given to the surface side of the protective coating 13.

In accordance with the first embodiment as described above, because the range of the protective coating 13 can be limited within the range where the electric discharge is generated and the pretreatment accompanying the formation of the protective coating and the post-treatment accompanying the formation of the protective coating can be respectively omitted, the production time required to the production of the turbine rotor blade 1 can be shortened and the productivity of the turbine rotor blade 1 can be easily improved. In particular, not by means of a step of forming a base coating having oxidation resistance and another step of forming a protective coating having abrasiveness, in other words, not by means of two steps of forming coatings, but by means of one step of forming the coating, the protective coating 13 having oxidation resistance and abrasiveness can be formed at the tip end of the rotor blade main body 5 and the production time required to the production of the turbine rotor blade 1 can be further shortened.

Moreover, because the protective coating 13 and the base material of the rotor blade main body 5 can be firmly combined, the protective coating 13 comes to hardly peel off from the tip end portion of the rotor blade main body 5 and hence quality of the turbine rotor blade 1 can be stabilized.

Furthermore, because the residual compression stress can be given to the surface side of the protective coating 13, fatigue strength of the protective coating 13 can be improved and the life of the turbine rotor blade 1 can be elongated.

Meanwhile, the present invention is not limited to the description of the first embodiment and can be properly modified into such that a surface treatment so as to ensure oxidation resistance and abrasiveness based on the novel surface treatment method in accordance with the first embodiment is processed to a portion to be processed of a component main body in a turbine component other than the turbine rotor blade 1.

### (MODIFIED EXAMPLE)

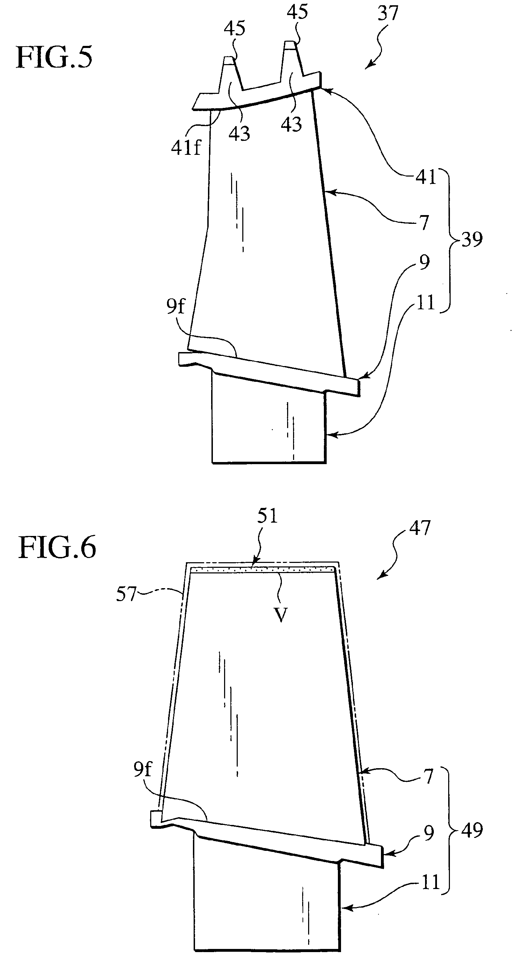

A modified example of the first embodiment will be described hereinafter with reference to Fig. 5 and Fig. 1.

As shown in Fig. 5, a turbine rotor blade 37 in accordance with the modified example of the first embodiment is, as similar to the turbine rotor blade 1, one of turbine components used in the gas turbine engine 3 and rotatable around the axial center 3c of the gas turbine engine 3. Moreover, the turbine rotor blade 37 is provided with a rotor blade main body 39 as a component main body and the rotor blade main body 39 is composed of a blade 7, a platform 9, a dovetail 11 and further a shroud 41 formed at the tip end of the blade 7. The shroud 41 has a flow pathway face 41f for a combustion gas and is provided with a pair of tip seals 43. Tip end portions of the pair of tip seals in the shroud 41 serve as portions to be processed of the blade main body 39.

Further, protective coatings 45 having oxidation resistance and abrasiveness are formed at the tip end portions of the pair of tip seals 43 based on the novel first surface treatment method as similar to the protective coating 13 in the turbine rotor blade 1 and surface sides of the protective coatings 45 are processed with the peeling treatment.

Therefore, also in the modified example of the first embodiment, operations and effects similar to the operations and the effects of the aforementioned first embodiment are achieved.

### (SECOND EMBODIMENT)

A first embodiment will be described hereinafter with reference to Fig. 1, Fig. 3, Fig. 6, Fig. 7(a) and Fig. 7(b).

As shown in Fig. 1, a turbine rotor blade 47 in accordance with the first embodiment is, as similar to the turbine rotor blade 1 in accordance with the first embodiment, one of turbine components used in a gas turbine engine of a jet engine or such and rotatable around the axial center 3c of the gas turbine engine 3.

As shown in Fig. 6, the turbine rotor blade 47 is provided with a rotor blade main body 49 as a component main body and the rotor blade main body 49 is, as similar to the rotor blade main body 5 in the turbine rotor blade 1, composed of a blade 7, a platform 9, a dovetail 11. Meanwhile, a tip end portion of the blade 7 serves as a first portion to be processed of the rotor blade main body 5 and the whole of blade faces including the tip end portion of the blade 7 serves as a second portion to be processed.

The tip end portion of the blade 7 and the whole of the blade faces A are processed with a surface treatment as follows based on a novel surface treatment method. In other words, coatings of novel constitution are formed on the tip end portion of the blade 7 and the whole of the blade faces.

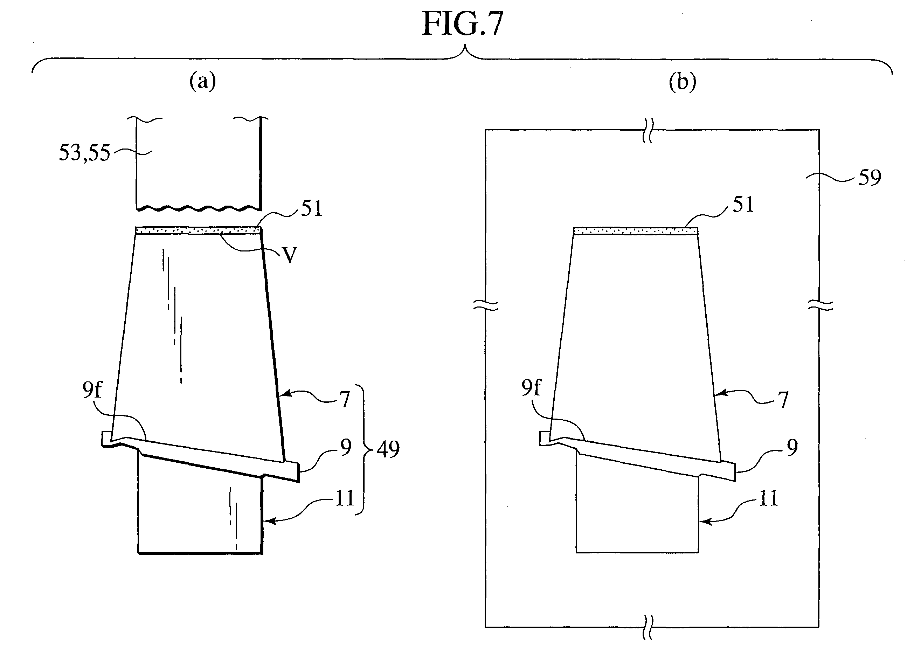

More specifically, a first protective coating 51 having abrasiveness is formed at the tip end portion of the blade 7 by means of energy of an electric discharge. In concrete terms, the first protective coating 51 is formed by employing an electrode 53 shown in Fig. 7(a) and the electric spark machine 15 shown in Fig. 3 in accordance with the embodiments and generating pulsing electric discharge between the tip end portion of the blade 7 and the electrode 53 in the liquid S of electrical insulation so that an electrode material of the electrode 53 or a reaction substance of the electrode material carries out deposition, diffusion and/or welding on the tip end portion of the blade 7. Meanwhile, instead of generating the pulsing discharge in the liquid S of electrical insulation, a pulsing discharge may be generated in a gas of electrical insulation.

Here, the electrode 53 is composed of a molded body molded by compressing mixed powder of powder of an oxidation-resistant and powder of a ceramic or the molded body processed with a heat treatment by means of a vacuum furnace or such. Meanwhile, instead of molding by compressing, the electrode 53 may be formed by slurry pouring, MIM (Metal Injection Molding), spray forming and such.

The ceramic composing the electrode 53 is the same as the ceramic composing the electrode 31 in accordance with the first embodiment. Meanwhile, the tip end portion of the electrode 53 shows a shape similar to the tip end portion of the blade 7.

On the other hand, instead of the electrode 53, an electrode 55 composed of a solidbody of Si, a moldedbodymoldedby compressing a powder of Si, or the molded body processed with a heat treatment by means of a vacuum furnace or such may be used. And, in this case, a pulsing electric discharge is generated in an electrically insulating liquid including alkane hydrocarbons. Meanwhile, instead of molding by compressing, the electrode 55 may be formed by slurry pouring, MIM (Metal Injection Molding), spray forming and such.

Moreover, the turbine rotor blade 47 is so constituted that a coverage of the first protective coating 51 is 60% or more and 95% or less. Meanwhile, the coverage of the first protective coating 51 is preferably 90% or more and 95% or less. Here, "coverage" means a ratio of covering.

Here, as a method for reducing the coverage of the first protective coating 51, a method to shorten an electric discharge time and leave small spots at the tip end portion of the blade 7 where the electric discharge is not generated was adopted. Meanwhile, although an electric discharge time in general is about 5 min/cm², a treatment about 3.8 min/cm² is preferable.

A formula for calculation of the electric discharge time required to gaining a coverage of 95% is as follows.

The electric discharge time required to gaining a 95% coverage = an electric discharge time required to gaining a 98% coverage × log (1-0. 95) /log (1-0.98) Meanwhile, the 98% coverage is deemed to be the 100% coverage.

Further, after forming the first protective coating 51, the surface side of the first protective coating 51 is processed with the peening treatment. Meanwhile, as concrete modes of the peening treatment, a shot-peening treatment using shot and a laser-peening treatment using laser are exemplified.

An aluminum coating 57 as a second protective coating having oxidation resistance is formed on the whole of the blade faces of the blade 7 so as to cover the first protective coating 51. Here, the aluminum coating 57 is, as shown in Fig. 7(b), formed by an aluminizing treatment by using a heat treatment furnace 59 after processing the surface side of the first protective coating 51 with the peening treatment.

Meanwhile, instead of forming the aluminum coating 57 by means of the aluminizing treatment, a chromium coating as a second protective coating having oxidation resistance may be formed by means of a chromizing treatment or the second protective coating having oxidation resistance may be formed by CVD or PVD. Moreover, there may be a case where the heat treatment furnace 59 is not used for the aluminizing treatment.

Next, operations of a second best mode will be described.

First, because the first protective coating 51 is formed by means of the energy of the electric discharge, a range of the first protective coating 51 can be limited within the range where the electric discharge is generated and the pretreatment accompanying the formation of the first protective coating 51 and the post-treatment accompanying the formation of the first protective coating 51 can be respectively omitted.

Moreover, for the same reason, a boundary part B between the first protective coating 51 formed by the energy of the electric discharge and the base material of the rotor blade main body 49 has a structure in which a composition ratio grades and hence the first protective coating 51 and the base material of the rotor blade main body 49 can be firmly combined.

Furthermore, because the coverage of the first protective coating is 60% or more, a hardness of the first protective coating 51 is sufficiently elevated and hence wearing of the turbine rotor blade 47 caused by contact with stationary components such as a turbine case or a turbine shroud (not shown) can be sufficiently suppressed. Moreover, because the coverage of the first protective coating 51 is 95% or less, a thermal expansion difference and a difference in expansion caused by reciprocal stresses between the first protective coating 51 and the base material of the rotor blade main body 49 when the gas turbine engine 3 is in operation can be allowed to some extent.

Moreover, because the surface side of the first protective coating 51 is processed with the peening treatment, residual compression stress can be given to the surface side of the first protective coating 51.

In accordance with the second embodiment as described above, because the range of the first protective coating 51 can be limited within the range where the electric discharge is generated and the pretreatment accompanying the formation of the first protective coating 51 and the post-treatment accompanying the formation of the first protective coating 51 can be respectively omitted, the production time required to the production of the turbine rotor blade 47 can be shortened and the productivity of the turbine rotor blade 47 can be easily improved.

Moreover, because the first protective coating 51 and the base material of the rotor blade main body 49 can be firmly combined, the first protective coating 51 comes to hardly peel off from the base material of the rotor blade main body 49 and hence quality of the turbine rotor blade 47 can be stabilized.

Furthermore, because the hardness of the first protective coating 51 is sufficiently elevated and, with suppressing wearing of the turbine rotor blade 47 caused by contact with the stationary components, the thermal expansion difference and the difference in expansion caused by reciprocal stresses between the first protective coating 51 and the base material of the rotor blade main body 49 when the gas turbine engine 3 is in operation can be allowed to some extent, fracture of the first protective coating 51 when the gas turbine engine 3 is in operation comes to rarely happen and elongation of the life of the turbine rotor blade 47 can be promoted.

Moreover, because the residual compression stress can be given to the surface side of the first protective coating 51, fatigue strength of the first protective coating 51 can be improved and the life of the turbine rotor blade 47 can be elongated.

Meanwhile, the present invention is not limited to the description of the aforementioned second embodiment and a surface treatment based on the novel surface treatment method in accordance with the second embodiment can be processed to a portion to be processed of a component main body in a turbine component other than the turbine rotor blade 47.

Moreover, another protective coating having erosion resistance or heat-shielding property composed of the same constitution as the first protective coating 51 may be formed on a portion to be processed of a component main body in a turbine component other than the turbine rotor blade 47. Here, the erosion resistance means a property of insusceptibility to corrosion by collision of alien substances or such.

### (THIRD EMBODIMENT)

A third best mode will be described hereinafter with reference to Fig. 1, Fig. 3, Fig. 8 (a), Fig. 8 (b), Fig. 9 (a) and Fig. 9 (b) .

As shown in Fig. 1, a turbine rotor blade 61 in accordance with the third embodiment is, as similar to the turbine rotor blade 1 in accordance with the first embodiment, one of turbine components used in a gas turbine engine of a jet engine or such and rotatable around the axial center 3c of the gas turbine engine 3.

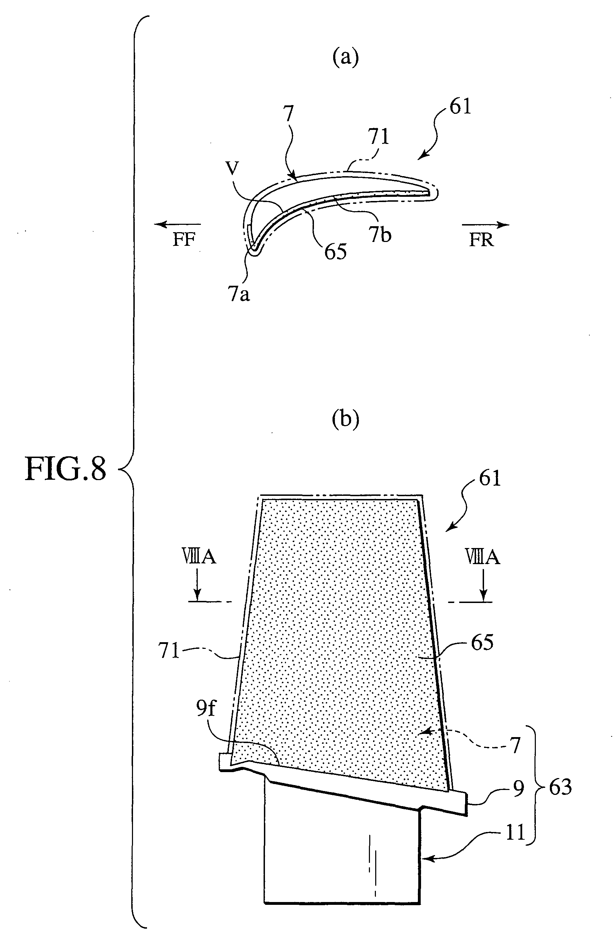

As shown in Fig. 8 (a) and Fig. 8(b), the turbine rotor blade 61 is provided with a rotor blade main body 63 as a component main body and the rotor blade main body 63 is, as similar to the rotor blade main body 5 in the turbine rotor blade 1, composed of a blade 7, a platform 9, a dovetail 11. Meanwhile, a portion ranging from a leading edge 7a to a pressure sidewall 7b of the blade 7 serves as a first portion to be processed of the rotor blade main body 63 and the whole of the blade faces of the blade 7 serves as a second portion to be processed of the rotor blade main body 63.

The portion ranging from the leading edge 7a to the pressure sidewall 7b of the blade 7 and the whole of the blade faces are processed with a surface treatment as follows based on a novel surface treatment method. In other words, coatings of novel constitution are formed on the portion ranging from the leading edge 7a to the pressure sidewall 7b of the blade 7 and the whole of the blade faces.

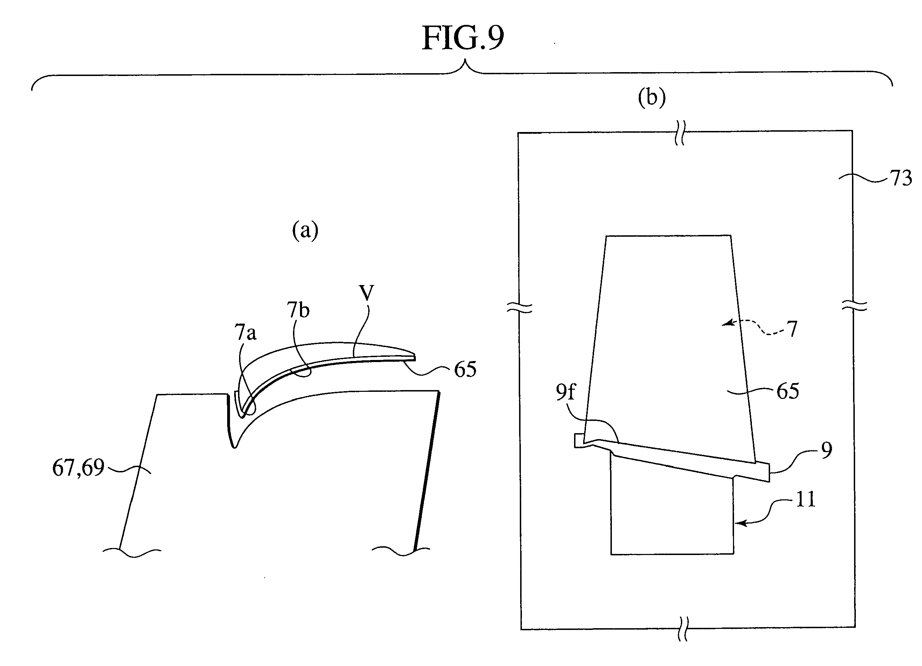

More specifically, a hard first protective coating 65 is formed at the portion ranging from the leading edge 7a to the pressure sidewall 7b of the blade 7. In concrete terms, the first protective coating 65 is formed by employing the electric spark machine 15 shown in Fig. 3 and an electrode 67 shown in Fig. 9(a), generating pulsing electric discharge between the portion ranging from the leading edge 7a to the pressure sidewall 7b of the blade 7 and the electrode 67 so that an electrode material of the electrode 67 or a reaction substance of the electrode material carries out deposition, diffusion and/or welding on the portion ranging from the leading edge 7a to the pressure sidewall 7b of the blade 7.

Here, the electrode 67 is substantially the same in a constitution as the electrode 53 in accordance with the second embodiment and a tip end portion of the electrode 53 shows a shape similar to a shape of the portion ranging from the leading edge 7a to the pressure sidewall 7b of the blade 7.

On the other hand, instead of the electrode 67, an electrode 69 composed of a solid body of Si, a molded body molded by compressing a powder of Si, or the molded body processed with a heat treatment by means of a vacuum furnace or such may be used. And, in this case, a pulsing electric discharge is generated in an electrically insulating liquid including alkane hydrocarbons. Meanwhile, instead of molding by compressing, the electrode 69 may be formed by slurry pouring, MIM (Metal Injection Molding), spray forming and such.

Moreover, the turbine rotor blade 61 is so constituted that a coverage of the first protective coating 65 is 60% or more and 95% or less. Meanwhile, the coverage of the first protective coating 65 is preferably 90% or more and 95% or less. Furthermore, after forming the first protective coating 65, a surface side of the first protective coating 65 is processed with the peening treatment.

Furthermore, as shown in Fig. 8 (a) and Fig. 8(b), an aluminum coating 71 as a second protective coating having oxidation is formed on the whole of the blade faces of the blade 7 so as to cover the first protective coating 65. Further, the aluminum coating 71 is, as shown in Fig. 9(b), formed by an aluminizing treatment by using a heat treatment furnace 73 after forming the first protective coating 65.

Meanwhile, instead of forming the aluminum coating 71 by means of the aluminizing treatment, a chromium coating as a second protective coating having oxidation resistance may be formed by means of a chormizing treatment or the second protective coating having oxidation resistance may be formed by CVD or PVD. Moreover, there may be a case where the heat treatment furnace 73 is not used for the aluminizing treatment.

Next, operations of the third embodiment will be described.

First, because the first protective coating 65 is formed by the energy of the electric discharge, a range of the first protective coating 65 can be limited within the range where the electric discharge is generated and the pretreatment accompanying the formation of the first protective coating 65 and the post-treatment accompanying the formation of the second protective coating 65 can be respectively omitted.

Moreover, for the same reason, a boundary part B between the first protective coating 65 formed by the energy of the electric discharge and the base material of the rotor blade main body 63 has a structure in which a composition ratio grades and hence the first protective coating 65 and the base material of the rotor blade main body 63 can be firmly combined.

Furthermore, because the coverage of the first protective coating is 60% or more, a hardness of the first protective coating 65 is sufficiently elevated and hence wearing caused by collision of dust, sand and such can be sufficiently suppressed. Moreover, because the coverage of the first protective coating 65 is 95% or less, a thermal expansion difference and a difference in expansion caused by reciprocal stresses between the first protective coating 65 and the base material of the rotor blade main body 63 when the gas turbine engine 3 is in operation can be allowed to some extent.

Moreover, because the surface side of the first protective coating 65 is processed with the peening treatment, residual compression stress can be given to the surface side of the first protective coating 65.

In accordance with the third embodiment as described above, because the range of the first protective coating 65 can be limited within the range where the electric discharge is generated and the pretreatment accompanying the formation of the first protective coating 65 and the post-treatment accompanying the formation of the first protective coating 65 can be respectively omitted, the production time required to the production of the turbine rotor blade 61 can be shortened and the productivity of the turbine rotor blade 61 can be easily improved.

Moreover, because the first protective coating 65 and the base material of the rotor blade main body 63 can be firmly combined, the first protective coating 65 comes to hardly peel off from the base material of the rotor blade main body 63 and hence quality of the turbine rotor blade 61 can be stabilized.

Furthermore, because the hardness of the first protective coating 65 is sufficiently elevated and, with suppressing wearing caused by collision of dust, sand and such, the thermal expansion difference and the difference in expansion caused by reciprocal stresses between the first protective coating 65 and the base material of the rotor blade main body 63 when the gas turbine engine 3 is in operation can be allowed to some extent, fracture of the first protective coating 65 when the gas turbine engine 3 is in operation comes to rarely happen and elongation of the life of the turbine rotor blade 61 can be promoted.

Moreover, because the residual compression stress can be given to the surface side of the first protective coating 65, fatigue strength of the first protective coating 65 can be improved and the life of the turbine rotor blade 61 can be elongated.

Meanwhile, the present invention is not limited to the description of the aforementioned third embodiment and can be properly modified into such that a surface treatment based on the novel surface treatment method in accordance with the third embodiment can be processed to a portion to be processed of a component main body in a turbine component other than the turbine rotor blade 61.

### (FOURTH EMBODIMENT)

A fourth embodiment will be described hereinafter with reference to Fig. 1, Fig. 3, Fig. 10, Fig. 11(a), Fig. 11(b) and Fig. 11(c).

As shown in Fig. 1, a turbine rotor blade 75 in accordance with the fourth embodiment is, as similar to the turbine rotor blade 1 in accordance with the first embodiment, one of turbine components used in a gas turbine engine of a jet engine or such and rotatable around the axial center 3c of the gas turbine engine 3.

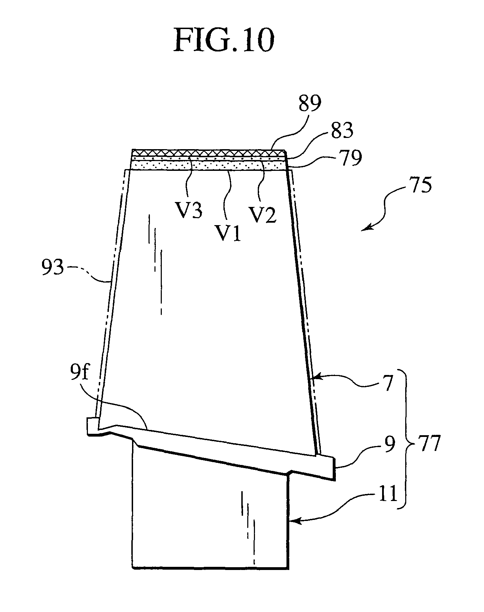

As shown in Fig. 10, the turbine rotor blade 74 is provided with a rotor blade main body 77 as a component main body and the rotor blade main body 77 is, as similar to the rotor blade main body 5 in the turbine rotor blade 1, composed of a blade 7, a platform 9, a dovetail 11. Meanwhile, a tip end portion of the blade 7 serves as a portion to be processed of the rotor blade main body 77.

Further, a coating of a novel constitution having oxidation resistance and abrasiveness is, as described later, formed at the tip end portion of the blade 7. In other words, the tip end portion of the blade 7 is process with a surface treatment based on a novel surface treatment method in accordance with the fourth embodiment.

More specifically, a porous base coating 79 having oxidation resistance and heat-shielding property is formed at the tip end portion of the blade 7 by means of energy of an electric discharge. In concrete terms, the base coating 79 is formed by employing an electrode 81 for the base coating and the electric spark machine 15 shown in Fig. 3 in accordance with embodiments and generating pulsing electric discharge between the tip end portion of the blade 7 and the electrode 81 in the liquid S of electrical insulation so that an electrode material of the electrode 81 or a reaction substance of the electrode material carries out deposition, diffusion and/or welding on the tip end portion of the blade 7 by means of the energy of the electric discharge. Meanwhile, instead of generating the pulsing discharge in the liquid S of electrical insulation, a pulsing discharge may be generated in a gas of electrical insulation.

Here, the electrode 81 is composed of a molded body molded by compressing mixed powder of powder of an oxidation-resistant and powder of a ceramic or the molded body processed with a heat treatment by means of a vacuum furnace or such. Meanwhile, instead of molding by compressing, the electrode 81 may be formed by slurry pouring, MIM (Metal Injection Molding), spray forming and such.

Moreover, the oxidation-resistant metal composing the electrode 81 is the same as the oxidation-resistant metal composing the electrode 31 in accordance with the first embodiment. Meanwhile, the tip end portion of the electrode 81 shows a shape similar to a shape of the tip end portion of the blade 7.

As shown in Fig. 10, an intermediate coating 83 is formed on a surface side of the base coating 79 by means of energy of the electric discharge and the intermediate coating 83 is composed of a composite material consisting primarily of at least any one of SiC and MoSi₂ which is changeable into SiO₂ having fluidity when the gas turbine engine is in operation.

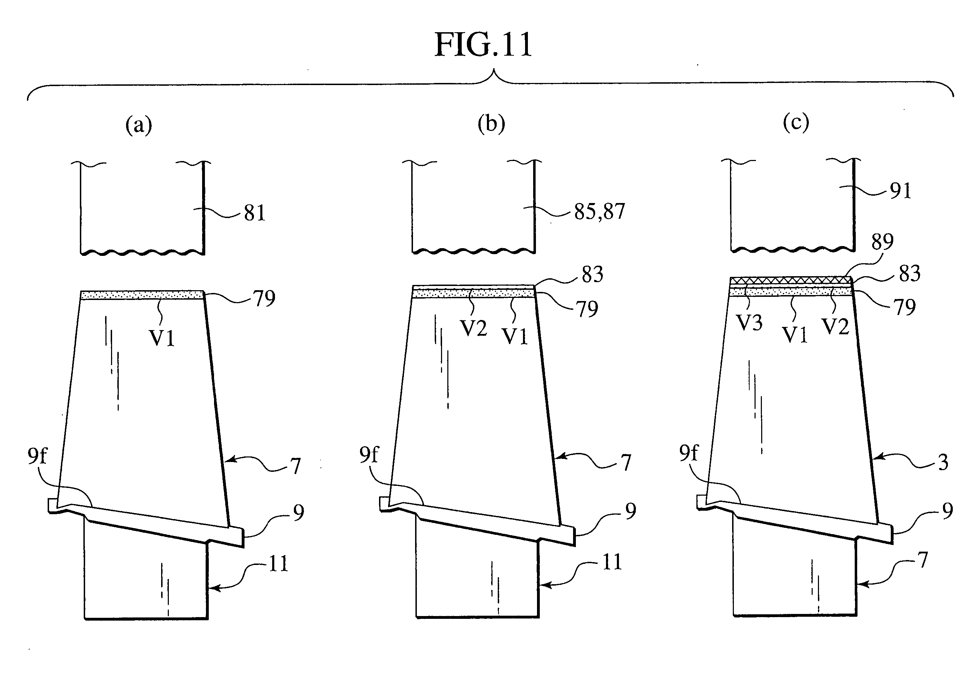

In concrete terms, the intermediate coating 83 is formed by employing an electrode 85 for the intermediate coating shown in Fig. 11(b) and the electric spark machine 15 shown in Fig. 3 in accordance with embodiments and generating pulsing electric discharge between the base coating 79 and the electrode 85 in the liquid S of electrical insulation so that an electrode material of the electrode 85 or a reaction substance of the electrode material carries out deposition, diffusion and/or welding on the surface side of the base coating 79 by means of the energy of the electric discharge. Meanwhile, instead of generating the pulsing discharge in the liquid S of electrical insulation, a pulsing discharge may be generated in a gas of electrical insulation.

Here, the electrode 85 is composed of a molded body molded by compressing powder of the composite material or the molded body processed with a heat treatment by means of a vacuum furnace or such. Meanwhile, instead of molding by compressing, the electrode 53 may be formed by slurry pouring, MIM (Metal Injection Molding), spray forming and such. Moreover, a tip endportion of the electrode 85 shows a shape similar to a shape of the tip end portion of the blade 7.

On the other hand, instead of the electrode 85, an electrode 87 composed of a solidbodyof Si, a molded body molded by compressing a powder of Si, or the molded body processed with a heat treatment by means of a vacuum furnace or such may be used. And, in this case, a pulsing electric discharge is generated in an electrically insulating liquid including alkane hydrocarbons. Meanwhile, instead of molding by compressing, the electrode 87 may be formed by slurry pouring, MIM (Metal Injection Molding), spray forming and such.

As shown in Fig. 10, a hard protective coating 89 having abrasiveness is formed on the surface side of the intermediate coating 83 by means of energy of the electric discharge and the protective coating 89 is composed of an oxide series ceramic, cBN, a mixture of the oxide series ceramic and the oxidation-resistant metal or a mixture of cBN and the oxidation-resistant metal.

In concrete terms, the protective coating 89 is formed by employing an electrode 91 for the protective coating shown in Fig. 11 (c) and the electric spark machine 15 shown in Fig. 3 in accordance with the embodiments and generating pulsing electric discharge between the intermediate coating 83 and the electrode 91 in the liquid S of electrical insulation so that an electrode material of the electrode 91 or a reaction substance of the electrode material carries out deposition, diffusion and/or welding on the surface side of the intermediate coating 83. Meanwhile, instead of generating the pulsing discharge in the liquid S of electrical insulation, a pulsing discharge may be generated in a gas of electrical insulation.

Here, the electrode 91 is composed of a molded body molded by compressing powder of the oxide series ceramic, powder of cBN, a mixed powder of the oxide series ceramic and the oxidation-resistant metal or a mixed powder of cBN and the oxidation-resistant metal or the molded body processed with a heat treatment by means of a vacuum furnace or such. Meanwhile, instead of molding by compressing, the electrode 91 may be formed by slurry pouring, MIM (Metal Injection Molding), spray forming and such.

Moreover, the oxide series ceramic composing the electrode 91 is, in the fourth embodiment, yttria-stabilized zirconia, however, any oxide series ceramics other then yttria-stabilized zirconia may be used. Meanwhile, a tip end portion of the electrode 91 shows a shape similar to a shape of the tip end portion of the blade 7.

As shown in Fig. 10, an aluminum coating 93 as a second protective coating is formed on the blade faces of the blade 7 and the flow pathway face 9f of the platform 9 by means of an aluminizing treatment. Meanwhile, instead of forming the aluminum coating 93 by means of the aluminizing treatment, a chromium coating as the second protective coating having oxidation resistance may be formed by means of a chromizing treatment.

Next, operations of the fourth embodiment will be described.

First, because the base coating 79, the intermediate coating 83 and the protective coating 89 are formed by means of the energy of the electric discharge, a range of the protective coating 89 can be limited within the range where the electric discharge is generated and hence the pretreatment accompanying the formation of the protective coating 89 and the post-treatment accompanying the formation of the protective coating 89 can be respectively omitted.

Moreover, for the same reason, a boundary part V1 between the base coating 79 and the rotor blade main body 77, a boundary part V2 between the intermediate coating 83 and the base coating 79 and a boundary part V3 between the protective coating 89 and the intermediate coating 83 respectively have structures in which compositions ratios grade and hence the protective coating 89 can be firmly combined with the base material of the rotor blade main body 77 via the base coating 79 and the intermediate coating 83.

Furthermore, because the porous base coating 79 is formed at the tip end portion of the blade 7, by relaxation of stress generated by a thermal expansion difference between the rotor blade main body 77 and the protective coating 89 when the gas turbine engine 3 is in operation, occurrence of any defects such as fracture in the protective coating 89 can be suppressed and further, even if the defect occurred, propagation of the defect to the blade 7 could be prevented.

Moreover, during operation of the gas turbine engine 3, the composite material composing the intermediate coating 83 changes into SiO₂ having fluidity, SiO₂, in other words a part of the intermediate coating 83, intrudes into pores of the surface side of the base coating 79 so that air permeability of the surface side of the base coating 79 comes to be almost lost. Meanwhile, in a case where fracture occurs to the base coating 79, a part of the intermediate coating 83 intrudes into the pores and the fracture.

Furthermore, because thermal conductivity of the porous base coating 79 is low and the intermediate coating 83 is formed at the surface side of the base coating 79, heat-shielding property of the turbine rotor blade 75 can be increased.

In accordance with the fourth embodiment as described above, because the range of the protective coating 89 and such are limited to the range where the electric discharge is generated and the pretreatment accompanying the formation of the protective coating 89 and the post-treatment accompanying the formation of the protective coating 89 can be respectively omitted, the production time required to the production of the turbine rotor blade 75 can be shortened and the productivity of the turbine rotor blade 75 can be easily improved.

Moreover, because the protective coating 89 and the base material of the rotor blade main body 77 can be firmly combined, the protective coating 89 comes to hardly peel off from the base material of the rotor blade main body 77 and hence quality of the turbine rotor blade 75 can be stabilized.

Furthermore, during operation of the gas turbine engine 3, because SiO₂ is filled into the pores of the surface side of the base coating 79 and air permeability of the surface side of the base coating 79 comes to be almost lost, oxidation resistance of the turbine rotor blade 75 can be improved and hence quality of the turbine rotor blade 75 can be improved.

Meanwhile, the present invention is not limited to the description of the aforementioned fourth embodiment and can be properly modified into such that a surface treatment based on the novel surface treatment method in accordance with the fourth embodiment can be processed to a portion to be processed of a component main body in a turbine component other than the turbine rotor blade 75.

### (MODIFIED EXAMPLE)

Amodified example of the fourth embodiment will be described hereinafter with reference to 12A and 12B.

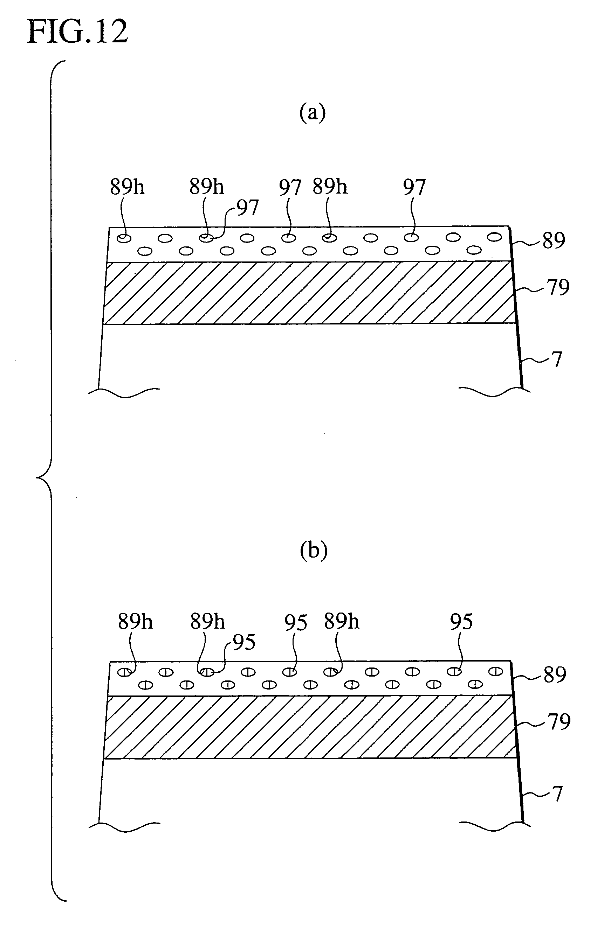

More specifically, as shown in Fig. 12 (b), instead of forming the intermediate coating 83 at the surface side of the base coating 79, the pores 89h of the protective coating 89 may be closed by an amorphous material 97 of glassy SiO₂. In this case, after forming the protective coating 89, the pores 89h of the protective coating 89 are closed by filling the pores 89h of the protective coating 89 with powder 99 of SiO₂ or MoSi₂ and heating the tip end portion of the blade 7 so that the powder 99 is changed into the amorphous material 97. Meanwhile, the powder 99 of SiO₂ or MoSi₂ are mixed in a liquid and then filled.

Meanwhile, in the modified example of the fourth embodiment, the same operations and the same effects as the operations and the effects of the fourth embodiment are achieved.

### (FIFTH EMBODIMENT)

A fifth embodiment will be described hereinafter with reference to Fig. 1, Fig. 3, Fig. 13, Fig. 14, Fig. 15(a), Fig. 15(b), Fig. 16(a) and Fig. 16(b).

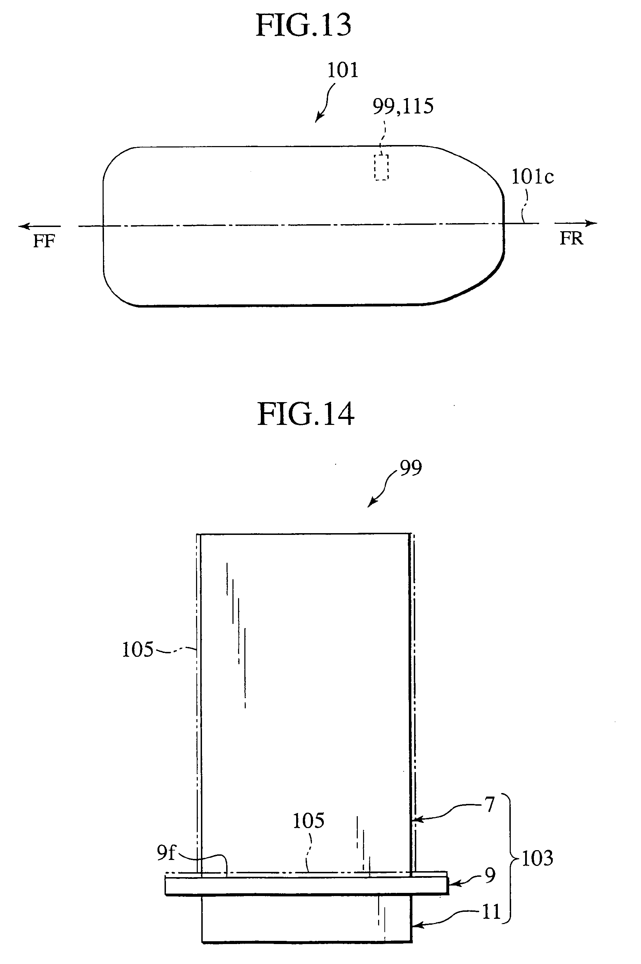

As shown in Fig. 1 and Fig. 13, a turbine rotor blade 99 in accordance with the fifth embodiment is one of turbine components employed in a gas turbine engine 3 or a steam turbine engine 101 and is rotatable around an axial center 3c of the gas turbine engine 3 or an axial center of 101c of the steam engine 101.

As shown in Fig. 14, the turbine rotor blade 99 is provided with a rotor blade main body 103 as a component main body and the rotor blade main body 103 is, as similar to the turbine rotor blade 1 in accordance with the first embodiment, composed of a rotor blade 7, a platform 9 and a dovetail 11. Meanwhile, a portion ranging from a leading edge 7a to a pressure sidewall 7b of the blade 7 and a flowpathway face 9f of the platform 9 serve as portions to be processed of the rotor blade main body 103.

The portion ranging from the leading edge 7a to the pressure sidewall 7b of the blade 7 and the flow pathway face 9f of the platform 9 are processed with a surface treatment so as to ensure erosion resistance based on a novel surface treatment method in accordance with the fifth embodiment. In other words, coatings of novel constitution are formed on the portion ranging from the leading edge 7a to the pressure sidewall 7b of the blade 7 and the flow pathway face 9f of the platform 9.

More specifically, hard protective coatings 105 are formed at the portion ranging from the leading edge 7a to the pressure sidewall 7b of the blade 7 and the flow pathway face 9f of the platform 9 by means of energy of an electric discharge.

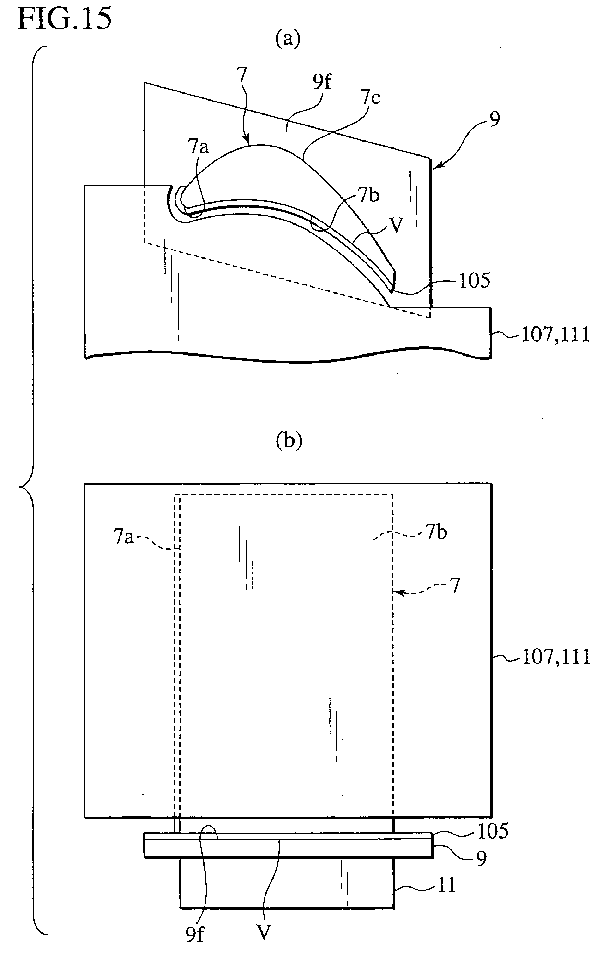

In concrete terms, major parts of the protective coatings 105 are formed by employing an electrode 107 shown in Fig. 15 (a) and Fig. 15(b) and the electric spark machine 15 shown in Fig. 3 in accordance with the embodiments and generating pulsing electric discharges between the portion ranging from the leading edge 7a to the pressure sidewall 7b of the blade 7 and the electrode 107 and between the pressure side of the flow pathway face 9f of the platform 9 and the electrode 107 so that an electrode material of the electrode 107 or a reaction substance of the electrode material carries out deposition, diffusion and/or welding on the portion ranging from the leading edge 7a to the pressure sidewall 7b of the blade 7 and the pressure side of the flow pathway face 9f of the platform 9 by means of the energy of the electric discharge. Meanwhile, instead of generating the pulsing discharge in the liquid S of electrical insulation, a pulsing discharge may be generated in a gas of electrical insulation.

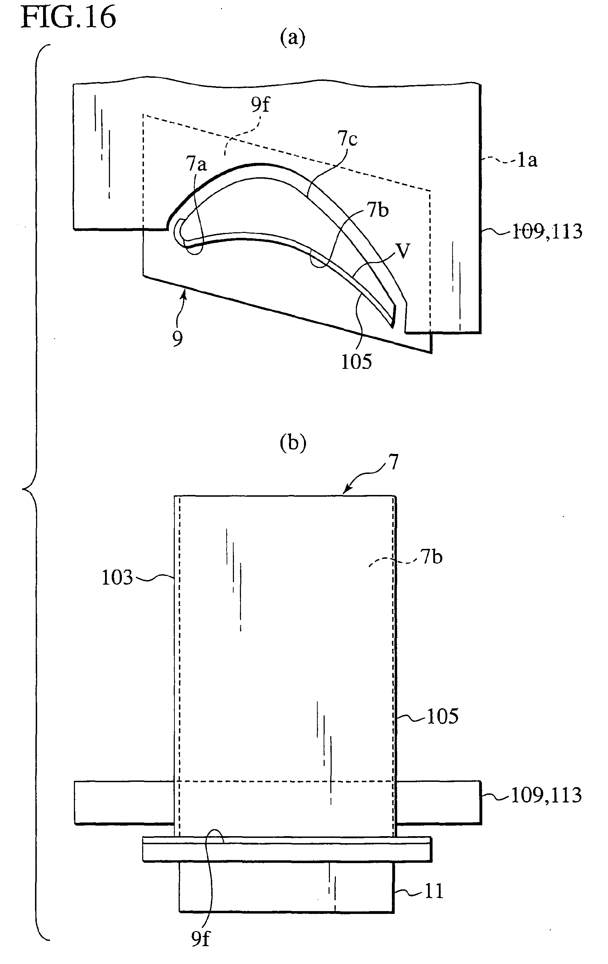

Furthermore, the remaining parts of the protective coatings 105 are formed by employing an electrode 109 shown in Fig. 16 (a) and Fig. 16(b) and the electric spark machine 15 shown in Fig. 3 in accordance with the embodiments and generating a pulsing electric discharge between the suction side of the flow pathway face 9f of the platform 9 and the electrode 109 so that an electrode material of the electrode 109 or a reaction substance of the electrode material carries out deposition, diffusion and/or welding on the suction side of the flow pathway face 9f of the platform 9 by means of the energy of the electric discharge.

Here, the electrodes 107 and 109 are the same in constitutions as the electrode 53 in accordance with the second embodiment. Meanwhile, a tip end portion of the electrode 107 shows a shape similar to a shape of the portion ranging from the leading edge 7a to the pressure sidewall 7b of the blade 7 and a tip end portion of the electrode 109 shows a shape similar to a shape of the pressure sidewall 7c of the blade 7.

Moreover, instead of the electrodes 107, 109, electrodes 111, 113 composed of molded bodies molded by compressing a solid body of Si, a powder of Si, or the molded bodies processed with a heat treatment by means of a vacuum furnace or such may be used. And, in this case, a pulsing electric discharge is generated in an electrically insulating liquid including alkane hydrocarbons. Meanwhile, instead of molding by compressing, the electrodes 111, 113 may be formed by slurry pouring, MIM (Metal Injection Molding), spray forming and such.

Furthermore, after forming the protective coating 105, a surface side of the protective coating 105 is processed with the peening treatment. As concrete modes of the peening treatment, a shot-peening treatment using shot and a laser-peening treatment using laser are exemplified.

Next, operations of the fifth embodiment will be described.

First, because the protective coating 105 is formed by means of the energy of the electric discharge, a range of the protective coating 105 can be limited within a range where the electric discharge is generated and hence a pretreatment accompanying the formation of the protective coating and a post-treatment accompanying the formation of the protective coating can be respectively omitted.

Moreover, for the same reason, a boundary part B between the protective coating 105 formed by the energy of the electric discharge and the base material of the rotor blade main body 103 has a structure in which a composition ratio grades and hence the protective coating 105 and the base material of the rotor blade main body 103 can be firmly combined.

Furthermore, because the surface side of the protective coating 105 is processed with the peening treatment, residual compression stress canbe given to the surface side of the protective coating 105.

In accordance with the fifth embodiment as described above, because the range of the protective coating 105 can be limited within the range where the electric discharge is generated and the pretreatment accompanying the formation of the protective coating 105 and the post-treatment accompanying the formation of the protective coating 105 can be respectively omitted, the production time required to the production of the turbine rotor blade 99 can be shortened and the productivity of the turbine rotor blade 99 can be easily improved.

Moreover, because the protective coating 105 and the base material of the rotor blade main body 103 can be firmly combined, the protective coating 105 comes to hardly peel off from the tip base material of the rotor blade main body 103 and hence quality of the turbine rotor blade 99 can be stabilized.

Furthermore, because the residual compression stress can be given to the surface side of the protective coating 105, fatigue strength of the protective coating 105 can be improved and the life of the turbine rotor blade 99 can be elongated.

Meanwhile, the present invention is not limited to the description of the fifth embodiment and can be properly modified into such that a surface treatment based on the novel surface treatment method in accordance with the fifth embodiment is processed to a portion to be processed of a component main body in a blade component other than the turbine rotor blade 99 or a portion to be processed of a component main body in a metal component other than a blade component.

### (MODIFIED EXAMPLE)

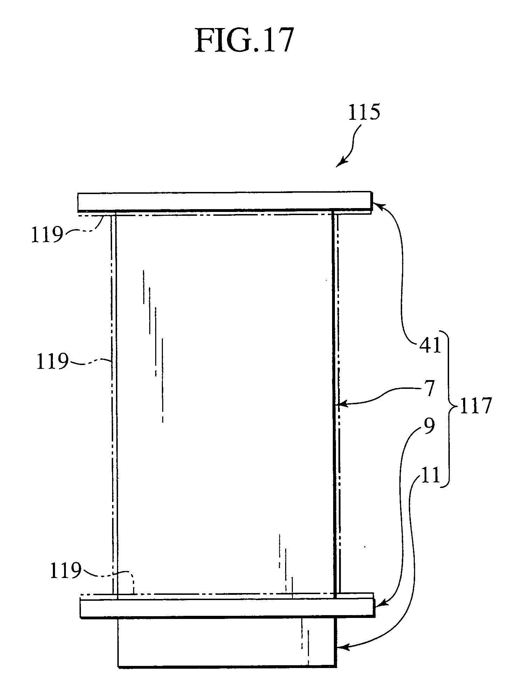

A modified example of the fifth embodiment will be described hereinafter with reference to Fig. 17.

As shown in Fig. 1 and Fig. 13, a turbine rotor blade 105 in accordance with the modified example of the fifth embodiment is, as similar to the turbine rotor blade 99, one of turbine components employed in the gas turbine engine 3 or the steam turbine engine 101 and is rotatable around the axial center 3c of the gas turbine engine 3 or the axial center of 101c of the steam engine 101.

Moreover, as shown in Fig. 17, the turbine rotor blade 115 is provided with a rotor blade main body 117 as a component main body and the rotor blade main body 117 is, as similar to the turbine rotor blade 37 in accordance with the modified example of the first embodiment, composed of a blade 7, a platform 9, a dovetail 11 and further a shroud 41. A portion ranging from a leading edge 7a to a pressure sidewall 7b of the blade 7, a flow pathway face 9f of the platform 9 and a flow pathway face 41f of the shroud 41 serve as portions to be processed of the blade main body 117.

Further, hard high-hardness coatings 119 having erosion resistance are formed on the portion ranging from the leading edge 7a to the pressure sidewall 7b of the blade 7, the flow pathway face 9f of the platform 9 and the flow pathway face 41 of the shroud 41 based on the novel surface treatment method in accordance with the fifth embodiment.

Meanwhile, in the modified example of the fifth embodiment, the same operations and the same effects as the operations and the effects of the fifth embodiment are achieved.

As described above, the invention has been described above by reference to several preferable embodiments, however, the scope. of right included in the present invention is not limited to these embodiments.

Moreover, the contents of Japanese Patent Application No. 20003-167068 filed with the Japan Patent Office on June 11, 2003, the contents of Japanese Patent Application No. 20004-088033 filed with the Japan Patent Office on March 24, 2004, the contents of Japanese Patent Application No. 20004-088031 filed with the Japan Patent Office on March 24, 2004 and the contents of Japanese Patent Application No. 20003-165403 filed with the Japan Patent Office on June 10, 2003 should have been cited in the contents of the present application by reference.

## Claims

1. A turbine component applied to a gas turbine engine and rotatable around an axial center of the gas turbine engine, the turbine component **characterized by** comprising:
a component main body; and
a protective coating having oxidation resistance and abrasiveness, the protective coating being formed on a portion to be processed of the component main body,
wherein the protective coating is formed by employing an electrode composed of a molded body molded from a mixed powder of a powder of an oxidation-resistant metal and a powder of a ceramic or the molded body processed with a heat treatment, and generating a pulsing electric discharge between the portion to be processed of the component main body and the electrode in an electrically insulating liquid or gas so that an electrode material of the electrode or a reaction substance of the electrode material carries out deposition, diffusion and/or welding on the portion to be processed of the component main body by energy of the electric discharge.

2. The turbine component recited in claim 1, **characterized in that** the oxidation-resistive metal is any one of or a mixed material of two or more of a NiCr alloy and M-CrAlY.

3. The turbine component recited in claim 1 or claim 2, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C .

4. The turbine component recited in any claim from claim 1 to claim 3, **characterized in that** a surface side of the protective coating is processed with a peening treatment.

5. A production method for production of a turbine component of a gas turbine engine and rotatable around an axial center of the gas turbine engine, the production method of the turbine component **characterized by** comprising:
a main body formation step forming a maj or part of a component main body by forging or casting and forming a remaining part of the component main body by machining;
a coating formation step forming a protective coating having oxidation resistance and abrasiveness by employing an electrode composed of a molded body molded from a mixed powder of a powder of an oxidation-resistant metal and a powder of a ceramic or the molded body processed with a heat treatment, and generating a pulsing electric discharge between the portion to be processed of the component main body and the electrode in an electrically insulating liquid or gas so that an electrode material of the electrode or a reaction substance of the electrode material carries out deposition, diffusion and/or welding on the portion to be processed of the component main body by energy of the electric discharge after finishing the main body formation step.

6. The production method of the turbine component recited in claim 5, **characterized in that** the oxidation-resistive metal is any one of or a mixed material of two or more of a NiCr alloy and M-CrAlY.

7. The production method of the turbine component recited in claim 5 or claim 6, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

8. The production method of the turbine component recited in any claim from claim 5 to claim 7, **characterized by** comprising;
a peening step processing a surface side of the protective coating with a peening treatment after finishing the coating formation step.

9. The production method of the turbine component recited in any claim from claim 5 to claim 8, **characterized in that** the turbine component is a turbine rotor blade.

10. A surface treatment method for carrying out a surface treatment with respect to a component main body as a constituent element of a turbine component applied to a gas turbine engine and rotatable around an axial center of the gas turbine engine so as to ensure oxidation resistance and abrasiveness resistance, the surface treatment method **characterized by**:
forming a protective coating having oxidation resistance and abrasiveness by employing an electrode composed of a molded body molded from a mixedpowder of a powder of an oxidation-resistant metal and a powder of a ceramic or the molded body processed with a heat treatment, and generating a pulsing electric discharge between the portion to be processed of the component main body and the electrode in an electrically insulating liquid or gas so that an electrode material of the electrode or a reaction substance of the electrode material carries out deposition, diffusion and/or welding on the portion to be processed of the component main body by energy of the electric discharge.

11. The surface treatment method recited in claim 10, **characterized in that** the oxidation-resistive metal is any one of or a mixed material of two or more of a NiCr alloy and M-CrAlY.

12. The surface treatment method recited in claim 10 or claim 11, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

13. The surface treatment method recited in any claim from claim 10 to claim 12, **characterized in that** a peening treatment is processed to a surface side of the protective coating after forming the protective coating.

14. The surface treatment method recited in any claim from claim 10 to claim 13, **characterized in that** the turbine component is a turbine rotor blade.

15. A turbine component applied to a gas turbine engine,
**characterized by** comprising:
a component main body;
a hard first protective coating having abrasiveness or erosion resistance, the first protective coating being formed on a first portion to be processed; and
a second protective coating having oxidation resistance, the second protective coating being formed on a second portion to be processed including the first portion to be processed in the component main body so as to cover the first protective coating,
wherein the first protective coating is formed by employing an electrode composed of a molded body molded from a powder of one material or a powder of two or more mixed materials of a powder of a metal, a metal compound and a powder of a ceramic or the molded body processed with a heat treatment, and generating a pulsing electric discharge between the first portion to be processed of the component main body and the electrode in an electrically insulating liquid or gas so that an electrode material of the electrode or a reaction substance of the electrode material carries out deposition, diffusion and/or welding on the first portion to be processed of the component main body by energy of the electric discharge.

16. The turbine component recited in claim 15, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

17. A turbine component applied to a gas turbine engine, **characterized by** comprising:
a component main body;
a hard first protective coating having abrasiveness or erosion resistance, the first protective coating being formed on a first portion to be processed; and
a second protective coating having oxidation resistance, the second protective coating being formed on a second portion to be processed including the first portion to be processed in the component main body so as to cover the first protective coating,
wherein the first protective coating is formed by employing an electrode composed of a solid body of Si, a molded body molded from a powder of Si, or the molded body processed with a heat treatment, and generating a pulsing electric discharge between the first portion to be processed of the component main body and the electrode in an electrically insulating liquid including alkane hydrocarbons so that an electrode material of the electrode or a reaction substance of the electrode material carries out deposition, diffusion and/or welding on the first portion to be processed of the component main body by energy of the electric discharge.

18. The turbine component recited in any claim from claim 15 to claim 17, **characterized in that** the oxidation-resistive coating is formed by an aluminizing treatment, a chromizing treatment, CVD or PVD.

19. The turbine component recited in any claim from claim 15 to claim 18, **characterized by** being so constituted that a coverage of the first protective coating is 60% or more and 95% or less.

20. A surface treatment method for carrying out a surface treatment with respect to a component main body as a constituent element of a turbine component applied to a gas turbine engine, the surface treatment method **characterized by**:
forming a hard first protective coating having abrasiveness or erosion resistance by employing an electrode composed of a molded body molded from a powder of any one of or a mixed material of two or more of a powder of a metal, a powder of a metal compound and a powder of a ceramic or the molded body processed with a heat treatment, and generating a pulsing electric discharge between a first portion to be processed of the component main body and the electrode so that an electrode material of the electrode or a reaction substance of the electrode material carries out deposition, diffusion and/or welding on the first portion to be processed of the component main body by energy of the electric discharge; and
forming a second protective coating having oxidation resistance on a second portion to be processed including the first portion to be processed in the component main body by an aluminizing treatment, a chromizing treatment, CVD or PVD so as to cover the first protective coating.

21. The surface treatment method recited in claim 20, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

22. A surface treatment method for carrying out a surface treatment with respect to a component main body as a constituent element of a turbine component applied to a gas turbine engine, the surface treatment method **characterized by**:
forming a hard first protective coating having abrasiveness or erosion resistance by employing an electrode composed of a solid body of Si, a molded body molded from a powder of Si, or the molded body processed with a heat treatment, and generating a pulsing electric discharge between a first portion to be processed of the component main body and the electrode in an electrically insulating liquid or gas so that an electrode material of the electrode or a reaction substance of the electrode material carries out deposition, diffusion and/or welding on the first portion to be processed of the component main body by energy of the electric discharge; and
forming a second protective coating having oxidation resistance on a second portion to be processed including the first portion to be processed in the component main body by an aluminizing treatment, a chromizing treatment, CVD or PVD so as to cover the first protective coating.

23. The surface treatment method recited in any claim from claim 20 to claim 22, **characterized in that** a coverage of the first protective coating is 60% or more and 95% or less.

24. The surface treatment method recited in any claim from claim 20 to claim 23, **characterized in that** the turbine component is a turbine rotor blade, the first portion to be processed is a tip end portion of a blade in a rotor blade main body as the component main body and the second treatment subject region is the whole of blade faces of the blade.

25. The surface treatment method recited in any claim from claim 20 to claim 24, **characterized in that** the turbine component is a turbine rotor blade, the first portion to be processed is a region ranging from a leading edge to a pressure sidewall of a blade in a rotor blade main body as the component main body and the second treatment subject region is the whole of blade faces of the blade.

26. A turbine component applied to a gas turbine engine, **characterized by** comprising:
a component main body;
a porous base coating having oxidation resistance and heat-shielding property, the porous base coating being formed on a portion to be processed by energy of an electric discharge;
an intermediate coating composed of a composite material consisting primarily of at least any one of SiC and MoSi₂ which is changeable into SiO₂ having fluidity when the gas turbine engine is in operation, the intermediate coating being formed on a surface side of the base coating;
a hard protective coating being composed of an oxide series ceramic, cBN, a mixture of the oxide series ceramic and the oxidation-resistant metal or a mixture of cBN and the oxidation-resistant metal and having abrasiveness, erosion resistance or oxidation resistance, the protective coating being formed on a surface side of the intermediate coating by energy of an electric discharge.

27. The turbine component recited in claim 26, **characterized in that**:
the base coating is formed by employing an electrode for the base coating composed of a molded body molded from a powder of an oxidation-resistant metal oxide or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge;
the intermediate coating is formed by employing an electrode for the intermediate coating composed of a molded body molded from a powder of the composite material or the molded body processed with a heat treatment, and generating a pulsing electric discharge between the base coating and the electrode for the intermediate coating in an electrically insulating liquid or gas so that an electrode material of the electrode for the intermediate coating or a reaction substance of the electrode material carries out deposition, diffusion and/or welding on a surface side of the base coating by energy of the electric discharge; and
the protective coating is formed by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the intermediate coating and the electrode for the protective coating in an electrically insulating liquid or gas so that an electrode material of the electrode for the protective coating or a reaction substance of the electrode material carries out deposition, diffusion and/or welding on a surface side of the intermediate coating by energy of the electric discharge.

28. The turbine component recited in claim 26, **characterized in that**:
the base coating is formed by employing an electrode for the base coating composed of a molded body molded from a powder of an oxidation-resistant metal oxide or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge;
the intermediate coating is formed by employing an electrode for the intermediate coating composed of a solid body of Si, a molded body molded from a powder of Si, or the molded body processed with a heat treatment, and generating a pulsing electric discharge between the base coating and the electrode for the intermediate coating in an electrically insulating liquid including alkane hydrocarbons so that an electrode material of the electrode or a reaction substance of the electrode material carries out deposition, diffusion and/or welding on a surface side of the base coating by energy of the electric discharge; and
the protective coating is formed by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the intermediate coating and the electrode for the protective coating in an electrically insulating liquid or gas so that an electrode material of the electrode for the protective coating or a reaction substance of the electrode material carries out deposition, diffusion and/or welding on a surface side of the intermediate coating by energy of the electric discharge.

29. A turbine component applied to a gas turbine engine, **characterized by** comprising:
a component main body;
abase coating having oxidation resistance and heat shielding property, the base coating being formed on a portion to be processed by energy of an electric discharge;
a hard protective coating having abrasiveness, erosion resistance or oxidation resistance, the protective coating being formed on a surface side of the base coating by energy of an electric discharge and composed of an oxide series ceramic or a mixture of the oxide series ceramic and the oxidation-resistant metal, pores of which are filled with an amorphous material of glassy SiO₂.

30. The turbine component recited in claim 29, **characterized in that**:
the base coating is formed by employing an electrode for the base coating composed of a molded body molded from a powder of an oxidation-resistant metal or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge; and
the protective coating is formed by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the base coating and the electrode for the protective coating in an electrically insulating liquid or gas so that an electrode material of the electrode for the protective coating or a reaction substance of the electrode material carries out deposition, diffusion and/or welding on a surface side of the base coating by energy of the electric discharge.

31. The turbine component recited in any claim from claim 26 to claim 30, **characterized in that** the oxidation-resistant metal is one or more metals of M-CrAlY and NiCr alloy, and the oxide series ceramic is yttria-stabilized zirconia.

32. A surface treatment method for carrying out a surface treatment with respect to a portion to be processed of a component main body as a constituent element of a turbine component applied to a gas turbine engine, the surface treatment method **characterized by**:
forming a porous base coating having oxidation resistance and heat-shielding property by employing an electrode for the base coating composed of a molded body molded from a powder of an oxidation-resistant metal or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge;
forming an intermediate coating which is changeable into SiO₂ having fluidity when the gas turbine engine is in operation by employing an electrode for the intermediate coating composed of a molded body molded from a powder of a composite material consisting primarily of at least any one of SiC and MoSi₂ or the compressed powder body processed with a heat treatment, and generating a pulsing electric discharge between the base coating and the electrode for the intermediate coating in an electrically insulating liquid or gas so that an electrode material of the electrode for the intermediate coating or a reaction substance of the electrode material carries out deposition, diffusion and/or welding on a surface side of the base coating by energy of the electric discharge;
forming a hard protective coating having abrasiveness, erosion resistance or heat-shielding property by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the intermediate coating and the electrode for the protective coating in an electrically insulating liquid or gas so that an electrode material of the electrode for the protective coating or a reaction substance of the electrode material carries out deposition, diffusion and/or welding on a surface side of the intermediate coating by energy of the electric discharge.

33. A surface treatment method for carrying out a surface treatment with respect to a portion to be processed of a component main body as a constituent element of a turbine component applied to a gas turbine engine, the surface treatment method **characterized by**:
forming a base coating having oxidation resistance and heat-shielding property by employing an electrode for the base coating composed of a molded body molded from a powder of an oxidation-resistant metal or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge;
forming an intermediate coating which is changeable into SiO₂ having fluidity when the gas turbine engine is in operation by employing an electrode for the intermediate coating composed of a solid body of Si, a molded body molded from a powder of Si, or the molded body processed with a heat treatment, and generating a pulsing electric discharge between the base coating and the electrode for the intermediate coating in an electrically insulating liquid including alkane hydrocarbons so that an electrode material of the electrode or a reaction substance of the electrode material carries out deposition, diffusion and/or welding on a surface side of the base coating by energy of the electric discharge; and
forming a hard protective coating having abrasiveness, erosion resistance or heat-shielding property by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the intermediate coating and the electrode for the protective coating in an electrically insulating liquid or gas so that an electrode material of the electrode for the protective coating or a reaction substance of the electrode material carries out deposition, diffusion and/or welding on a surface side of the intermediate coating by energy of the electric discharge.

34. A surface treatment method for carrying out a surface treatment with respect to a portion to be processed of a component main body as a constituent element of a turbine component applied to a gas turbine engine, the surface treatment method **characterized by**:
forming a porous base coating having oxidation resistance and heat-shielding property on the portion to be processed of the component main body by employing an electrode for the base coating composed of a molded body molded from a powder of an oxidation-resistant metal or the molded body processed with a heat treatment, and generating a pulsing electric discharge between the portion to be processed of the component main body and the electrode for the base coating in an electrically insulating liquid or gas so that an electrode material of the electrode for the base coating or a reaction substance of the electrode material carries out deposition, diffusion and/or welding on the portion to be processed of the component main body by energy of the electric discharge;
forming a hard protective coating having abrasiveness, erosion resistance or oxidation resistance by employing an electrode for the protective coating composed of a molded body molded from a powder of the oxide series ceramic, a powder of cBN, a mixed powder of a powder of the oxide series ceramic and a powder of the oxidation-resistant metal or a mixed powder of a powder of cBN and a powder of the oxidation-resistant metal or the molded body processed with a heat treatment, and generating a pulsing electric discharge between the base coating and the electrode for the protective coating in an electrically insulating liquid or gas so that an electrode material of the electrode for the protective coating or a reaction substance of the electrode material carries out deposition, diffusion and/or welding on a surface side of the base coating by energy of the electric discharge; and
further, closing pores of the protective coating by SiO₂ by filling a powder of SiO₂ or MoSi₂ into the pores of the protective coating, heating the portion to be processed of the component main body and changing the powder of SiO₂ or MoSi₂ into an amorphous material composed of glassy SiO₂.

35. The surface treatment method recited in any claim from claim 32 to claim 34, **characterized in that** the oxidation-resistant metal is one or plural metals of M-CrAlY and NiCr alloy, and the oxide series ceramic is yttria-stabilized zirconia.

36. A gas turbine engine **characterized by** comprising the turbine component recited in any claim of from claim 1 to claim 4, from claim 15 to claim 19, and from claim 26 to claim 31.

37. A metal component **characterized by** comprising:
a component main body;
a hard protective coating having erosion resistance, the protective coating being formed at a portion to be processed of the component main body,
wherein the protective coating is formed by employing an electrode composed of a molded body molded from a mixed powder of a powder of a metal or a powder of a metal compound and a powder of a ceramic or the molded body processed with a heat treatment, and generating a pulsing electric discharge between the predetermined region in the component main body and the electrode in an electrically insulating liquid or gas so that an electrode material of the electrode or a reaction substance of the electrode material carries out deposition, diffusion and/or welding on the predetermined region of the component main body by energy of the electric discharge.

38. The metal component recited in claim 37, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

39. A metal component **characterized by** comprising:
a component main body;
a hard protective having erosion resistance composed of SiC, the protective coating being formed at a portion to be processed of the component main body,
wherein the protective coating is formed by employing an electrode composed of a solid body of Si, a molded body molded from a powder of Si, or the molded body processed with a heat treatment, and generating a pulsing electric discharge between the first portion to be processed of the component main body and the electrode in an electrically insulating liquid including alkane hydrocarbons so that an electrode material of the electrode or a reaction substance of the electrode material carries out deposition, diffusion and/or welding on the first portion to be processed of the component main body by energy of the electric discharge.

40. The metal component recited in any claim from claim 37 to claim 39, **characterized in that** a surface side of the protective coating is processed with a peening treatment.

41. A blade component applied to a gas turbine engine or a steam turbine engine, **characterized by** comprising:
a component main body;
a hard protective coating having erosion resistance, the protective coating being formed at a portion to be processed of the component main body,
wherein the protective coating is formed by employing an electrode composed of a molded body molded from a mixed powder of a powder of a metal or a powder of a metal compound and a powder of a ceramic or the molded body processed with a heat treatment, and generating a pulsing electric discharge between the predetermined region in the component main body and the electrode in an electrically insulating liquid or gas so that an electrode material of the electrode or a reaction substance of the electrode material carries out deposition, diffusion and/or welding on the predetermined region of the component main body by energy of the electric discharge.

42. The blade component recited in claim 41, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

43. A blade component applied to a gas turbine engine or a steam turbine engine, **characterized by** comprising:
a component main body;
a hard protective having erosion resistance composed of SiC, the protective coating being formed at a portion to be processed of the component main body,
wherein the high-hardness coating is formed by employing an electrode composed of a solid body of Si, a molded body molded from a powder of Si, or the molded body processed with a heat treatment, and generating a pulsing electric discharge between the first portion to be processed of the component main body and the electrode in an electrically insulating liquid including alkane hydrocarbons so that an electrode material of the electrode or a reaction substance of the electrode material carries out deposition, diffusion and/or welding on the first portion to be processed of the component main body by energy of the electric discharge.

44. The blade component recited in any claim from claim 41 to claim 43, **characterized in that** a surface side of the high-hardness coating is processed with a peening treatment.

45. A gas turbine engine **characterized by** comprising the blade component recited in any claim from claim 41 to claim 44.

46. A steam turbine engine **characterized by** comprising the blade component recited in any claim from claim 41 to claim 44.

47. A surface treatment method for carrying out a surface treatment with respect to a portion to be processed of a component main body as a constituent element of a metal component so as to ensure erosion resistance, the surface treatment method **characterized by**:
forming a hard protective coating having erosion resistance by employing an electrode composed of a molded body molded from a mixed powder of a powder of a metal or a powder of a metal compound and a powder of a ceramic or the molded body processed with a heat treatment, and generating a pulsing electric discharge between the predetermined region in the component main body and the electrode in an electrically insulating liquid or gas so that an electrode material of the electrode or a reaction substance of the electrode material carries out deposition, diffusion and/or welding on the predetermined region of the component main body by energy of the electric discharge.

48. The surface treatment method recited in claim 47, **characterized in that** the ceramic is any one of or a mixed material of two or more of cBN, TiC, TiN, TiAlN, TiB₂, WC, SiC, Si₃N₄, Cr₃C₂, Al₂O₃, ZrO₂-Y, ZrC, VC and B₄C.

49. A surface treatment method for carrying out a surface treatment with respect to a portion to be processed of a component main body as a constituent element of a metal component so as to ensure erosion resistance, the surface treatment method **characterized by**:
forming a hard protective coating having erosion resistance by employing an electrode composed of a solid body of Si, a molded body molded from a powder of Si, or the molded body processed with a heat treatment, and generating a pulsing electric discharge between the first portion to be processed of the component main body and the electrode in an electrically insulating liquid including alkane hydrocarbons so that an electrode material of the electrode or a reaction substance of the electrode material carries out deposition, diffusion and/or welding on the first portion to be processed of the component main body by energy of the electric discharge.

50. The surface treatment method recited in any claim from claim 47 to claim 4 9, **characterized in that** a surface side of the protective coating is processed with a peening treatment after forming the protective coating.

51. The surface treatment method recited in any claim from claim 47 to claim 50, **characterized in that** the metal component is a blade component applied to a gas turbine engine or a steam turbine engine.
